# EUROPÄISCHE PATENTSCHRIFT

(11) **EP 0 753 077 B1**
(45) Veröffentlichungstag und Bekanntmachung des Hinweises auf die Patenterteilung: **20.01.1999**
(21) Anmeldenummer: 95915744.7
(22) Anmeldetag: 29.03.1995
(51) Int. Cl.: C21C 5/52, F27B 3/08, H05B 7/06

(54) **GLEICHSTROMBEHEIZTES METALLURGISCHES GEFÄSS MIT BODENELEKTRODE**
DC-HEATED METALLURGICAL VESSEL WITH BASE ELECTRODE
AVEC UN RECIPIENT METALLURGIQUE CHAUFFE PAR UN COURANT CONTINU

(30) Priorität: 30.03.1994 DE 4411591
(43) Veröffentlichungstag der Anmeldung: 15.01.1997
(73) Patentinhaber: MANNESMANN Aktiengesellschaft, 40213 Düsseldorf (DE)
(72) Erfinder: STARK, Heinz, 45219 Essen (DE); KÖNIG, Heribert, 47058 Duisburg (DE)
(74) Vertreter: Presting, Hans-Joachim, Dipl.-Ing.
(86) Internationale Anmeldenummer: DE9500452
(87) Internationale Veröffentlichungsnummer: WO9527084

(56) Entgegenhaltungen:
- WO-A-92/02112
- DE-A- 4 222 854
- STAHL UND EISEN, Bd. 114, Nr. 8, 15.August 1994 DUSSELDORF DE, Seiten 75-77, XP 000445086 SVEN-EINAR STENKVIST ET AL. 'Neue Entwicklungen für Drehstrom- und Gleichstrom-Lichtbogenöfen, Vorgetragen auf dem Eisenhüttentag des VDEh am 11.November 1993 '

## Beschreibung

Die Erfindung betrifft ein Gleichstrombeheiztes metallurgisches Gefäß mit Bodenelektrode, insbesondere zur Herstellung von Ferrolegierungen, welches einen metallischen Mantel besitzt, der mit Feuerfestmaterial ausgekleidet ist.

Mit Gleichstrom betriebene Gefäße, wie öfen, Pfannen o.ä., weisen neben der in Form eines Stabes in das Gefäß hineinragenden regelmäßig als Kathode ausgebildeten Elektrode eine im Boden bzw. im Bodenbereich angeordneten Anode auf. Diese Kontakteinrichtung verfolgt das Ziel, an der Peripherie eines in einem metallurgischen Gefäß befindlichen Metallbades einen kathodiscnen Kontakt herzustellen. Als Anoden kommen durch den Gefäßboden durchgeführte Metallstäbe oder auch elektrisch leitende feuerfeste Stampfmassen bzw. Ziegel zum Einsatz. So ist aus der Schrift DE 31 07 454 A1 eine ringförmig bzw. ringabschnittsförmig auf einem gemeinsamen Kreis längs der Peripherie der Pfanne angeordnete Kontakteinrichtung für eine Elektrode bekannt. Diese Kontakteinrichtung ist mit leitenden Einlagen verdunden, welche auch einen kleineren Teil des Gefäßbodens einnehmen können.

Bei aus dieser Schrift bekannten Bodenelektrode ist nur ein Teil des Gefäßbodens als Elektrode ausgebildet. Darüber hinaus eignet sich die bekannte Elektrode nur für kleinere Gefäße, da ein Ausgleich für die thermische Ausdehnung des Bodens, insbesondere bei größeren Gefäßen, nicht vorgesehen ist.

Ein Boden eines elektrisch beheizten Schmelzofens, insbesonders eines Gleichstrom-Lichtbogenofens ist auch aus der DE 35 34 750 C2 bekannt. Die Erfinder schlagen in dieser Schrift vor, zumindest den Zentralbereich eines elektrisch beheizten Schmelzofens mit als Elektroden dienen Schichten aus elektrisch leitendem Material zu versehen und dabei ein hochschmelzendes, nichtmetallisches Material zu verwenden. Dieser Schrift ist kein Hinweis zu entnehmen, wie der Kontakt zwischen der Stromzuführungsleitung und dem elektrisch leitenden Boden erfolgen soll.

Aufgabe der Erfindung ist es, eine Bodenelektrode eines mit Gleichstrom beheizten metallurgischen Gefäßes zu schaffen, bei dem ein möglichst großflächiger elektrischer Kontakt und dabei eine sichere Stromübertragung zwischen der Schmelze und der im Gefäßboden befindlichen Elektrodeneinrichtung bei einer von der thermischen Belastung der Feuerfestauskleidung unabhängigen Stromzuführungsleitung gewährleistet ist.

Die Erfindung erreicnt dieses Ziel durch die kennzeichnenden Merkmale des Anspruchs 1.

Erfindungsgemäß ist der unterhalb der Feuerfestseitenwand angeordnete Boden des metallurgischen Gefäßes aus elektrisch leitenden Material aufgebaut. An der Peripherie dieses Bodens sind metalliscne Platten vorgesehen, die jeweils an aus dem Ofengefäß herausragende Stromkontakte angeschlossen ist. Die einzelnen Platten bilden aneinandergereiht einen parallel zur Zentralachse angeordneten Kontaktplattenring, der sich knirsch gegen den Außenrand des elektrisch leitenden Bodens anlehnt und somit in der Lage ist, den elektrischen Strom sicher zu übertragen. An die Platten sind innig mit ihnen verbunden stabartige Elemente angeordnet, die strahlenförmig die Gefäßwand durchdringend nach außen geführt und dort an eine Sammelleitung angeschlossen sind. Durch die Wärmeausdehnung des Feuerfestmaterials wird eine sichere Kontaktierung mit den vorzugsweise aus Kupfer hergestellten Platten erreicht. Die innerhalb der Bodenausmauerung befindlichen Kontaktplatten sind vor Korrosion durch Luftabschluß geschützt.

Durch den Einsatz des aus elektrischen Strom leitenden Feuerfestmaterials im Boden wird eine hohe Effektivität des Kontaktes zwischen dem Metallbad und den Kupferplatten erreicht. Durch die Anordnung der Gesamtelektrode unterhalb des Badsumpfes wird ein von dem Füllgrad weitgehenst unabhängiger Kontakt erreicht. Dies wirkt sich bei der sehr unterschiedlichen elektrischen Leitfähigkeit der verschiedensten zu produzierenden Metalle verfahrenstechnisch deutlich positiv aus. Die Bodenelektrode ist dabei als Anode geschaltet, so daß der Stromfluß die durch die Wärme erzeugte Strömung des Bades unterstützt.

In einer vorteilhaften Weiterbildung ist jeweils eine Hälfte der Platten an eine separate Leitung angeschlossen. Auf diese Weise wird - sofern die elektrische Energieübertragung im Lichtbogen erfolgt - ein nichtkontrollierbares Ablenken des Lichtbogens zwischen der in das metallurgische Gefäß hineinragenden Elektrode und dem mit dem leitenden Boden verbundenen Metallbad vermieden.

Als Material der Bodenelektrode wird als Rufbaumaterial Feinmagnesitstein mit einem Kohlenstoffanteil von etwa 15% vorgeschlagen. Dieses Material hat geringe thermische Leitfähigkeit bei einer hohen elektriscnen Leitfähigkeit. Darüber hinaus ist es chemisch resistent gegenüber einer Reihe von im metallurgischen Gefäß herzustellenden oder einzuschmelzenden Metallen, insbesondere von Ferro-Legierungen.

Als Bodenelektrode kann aber auch ein Kohlenstoffstein in Form von großvolumigen Platten verwandt werden. Weiterhin wird vorgeschlagen, den Boden aus einer Stampfmasse herzustellen, wobei in vorteilhafter Weise die elektrische Leitfähigkeit dieser Stampfmasse durch Anreicherung mit metallischen Einlagerungen beeinfluß werden kann.

Die aus elektrisch Leitendem Feuerfestmaterial hergestellte Elektrode ist in geschützter Lage unterhalb der feuerfesten Seitenwand des metallurgischen Gefäßes angeordnet. Zwischen dem Metallmantel und der Bodenelektrode ist eine Dämpfungs- und Isoliermasse vorgesehen, die die Metallplatten zur sicheren Kontaktierung an die Peripherie der Bodenelektrode drückt, ohne daß Feuerfestmaterial zu zerstören.

Die metallischen Teile, die den Strom von der feuerfesten Bodenelektrode zur Stromleitung führen, sind gegenüber dem metallischen Gefäß galvanisch getrennt, um einen undefinierten Stromfluß über den metallischen Mantel des Ofengefäßes zu vermeiden.

Um jegliche Bewegungen zwischen den Stromleitungen und den mit den Stromplatten verbundenen Stäben schadlos aufnehmen zu können, sind diese Verbindungsleitungen als flexible Kabel ausgestaltet.

Ein Ausführungsbeispiel der Erfindung ist in der Zeichnung dargestellt und wird nachfolgend beschrieben. Es zeigt:
- Fig. 1: einen Schnitt durch das metallurgische Gefäß und
- Fig. 2: die elektrische Schaltung der stromführenden Elemente.

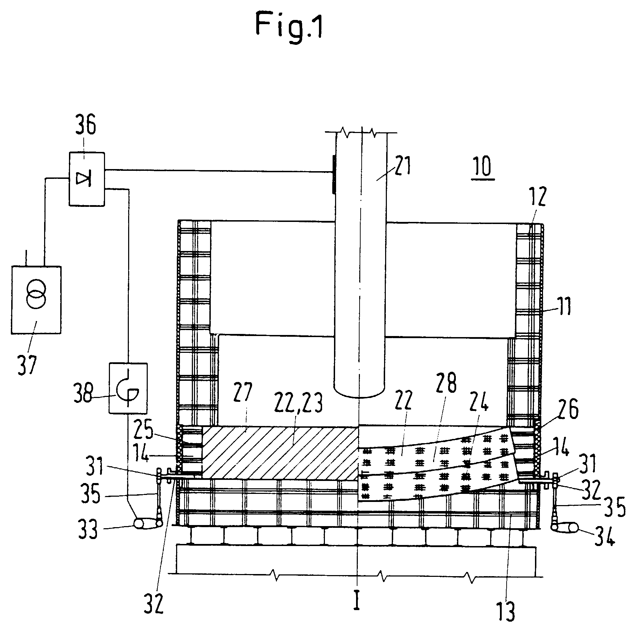

Die Figur 1 zeigt das Ofengefäß 10, in das eine stabförmige, als Kathode geschaltete Elektrode 21 hineinragt. Das Ofengefäß 10 weist einen metallischen Mantel 11 aus, das eine feuerfeste Seitenwand 12 und einen feuerfesten Boden 13 besitzt. Unmittelbar unterhalb der feuerfesten Seitenwand 12 ist die aus Feuerfestmaterial hergestellte Bodenelektrode 22 angeordnet. Im linken Teil der Figur ist die Bodenelektrode 22 aus einer Stampfmasse 23 hergestellt. In der Stampfmasse 23 sind im vorliegenden Beispiel metallische Einlagerung 27 vorgesehen. Auf der rechten Seite des Bildes ist die Bodenelektrode zum einen gekümpelt dargestellt und darüber hinaus aus zwei Steinlagen 24 und 28 aufgebaut.

An der Peripherie der Bodenelektrode 22 sind Platten 25 angeordnet, die sich über Dämpfungsmaterial 26 am metallischen Mantel 11 abstützen. An den Platten 25 sind Stromstäbe 31 befestigt, die durch das Dämpfungsmaterial 26 und den metallischen Mantel 11 hindurch aus dem Gefäß 10 herausgeführt werden. Die Stäbe 31 weisen dabei als galvanische Trennung eine Isolierung 32 auf. Die Stäbe 31 sind über flexible Kabel 35 mit einer Stromleitung 33 oder 34 verbunden. Die Kathode 21 und die Anode 22 sind mit der aus einem Gleichrichter 36, einem Transformator 37 und einer Drossel 38 bestehenden Stromenergieanlage verbunden.

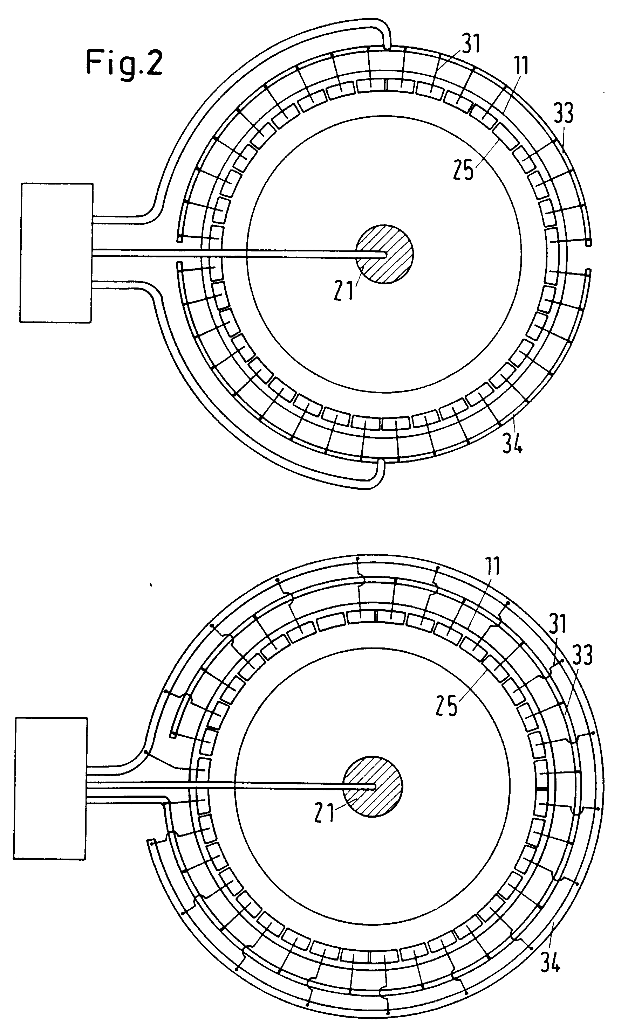

Die Figur 2 zeigt schematisch die Schaltung der einzelnen Platten 25, die sich an die Bodenelektrode 22 anlehnen und der als Kathode geschalteten Stabelektrode. Im oberen Teil sind die einzelnen Platten 25 in der Weise hälftig geteilt, daß die benachbarten Platten 25 der einen Hälfte des Gefäßes 11 über die Stromstäbe 31 der ersten Stromleitung 33 verbunden sind und die andere Hälfte in gleicher Bauweise mit der Stromleitung 34 verbunden sind. Im unteren Teil der Figur 2 sind die jeweils benachbarten Platten 25 entweder an die Stromleitung 33 oder an die Stromleitung 34 angeschlossen.

### Positionsliste:

- 10: Ofengefäß
- 11: metallischer Mantel
- 12: feuerfeste Seitenwand
- 13: feuerfester Boden
- 14: Stützstein

- 21: Stabelektrode (Kathode)
- 22: Bodenelektrode (Anode)
- 23: Stampfmasse
- 24: Steine
- 25: Platte
- 26: Dämpfungs- und Isoliermasse
- 27: metallische Einlagerung
- 28: zweite Feuerfestlage

- 31: Stromstab
- 32: elektrische Isolierung
- 33: Stromleitung erste Hälfte
- 34: Stromleitung zweite Hälfte
- 35: flexibles Kabel
- 36: Gleichrichter
- 37: Transformator
- 38: Drossel
- I: Mittenachse

## Patentansprüche

1. Gleichstrombeheiztes metallurgisches Gefäß mit Bodenelektrode insbesondere zur Herstellung von Ferrolegierung, welches einen metallischen Mantel besitzt, der mit Feuerfestmaterial ausgekleidet ist, wobei der dem Gefäßinnenraum zugeordnete, unterhalb der Feuerfestseitenwand des melallurgischen Gefäßes angeordnete Boden als Bodenelektrode aus elektrisch leitendem Feuerfestmaterial aufgebaut ist,
dadurch gekennzeichnet,
daß die Peripherie des elektrisch leitenden Bodens (22) von unter Luftabschluß befindlichen metallischen Platten (25) umfaßt ist,
daß die einzelnen metallischen Platten (25) an durch den metallischen Mantel (11) aus dem Ofengefäß (10) herausgeführten Stromstäben (31) angeschlossen sind,
daß die Platten (25) einschließlich der Stromstäbe (31) gegenüber dem metallischen Mantel (11) durch eine elektrische Isolierung (32) getrennt sind.

2. Gleichstrombeheiztes metallurgische Gefäß mit Bodenelektrode nach Anspruch 1,
dadurch gekennzeichnet,
daß die metallischen Platten (25) aus Kupfer sind und ein L-förmiges Profil mit einem vom Ofenmittelpunkt wegweisenden Schenkel besitzen.

3. Gleichstrombeheiztes metallurgische Gefäß mit Bodenelektrode nach Anspruch 1,
dadurch gekennzeichnet,
daß das elektrisch leitende Feuerfestmaterial (22) aus gebrannten Magnesitsteinen besteht, die einen Kohlenstoffanteil von 10 bis 20% aufweisen.

4. Gleichstrombeheiztes metallurgische Gefäß mit Bodenelektrode nach Anspruch 1,
dadurch gekennzeichnet,
daß zwischen dem elektrisch leitenden Boden (22) und dem metallischen Gefäßmantel (11) eine feuerfeste Dämpfungs- und Isolierungsmasse (26) vorgesehen ist.

5. Gleichstrombeheiztes metallurgische Gefäß mit Bodenelektrode nach Anspruch 4,
dadurch gekennzeichnet,
daß der elektrisch leitende Boden (22) gekümpelt ausgebildet ist und von einem zwischen der Dämpfungs- und Isolierungsmasse (26) und der gekümpelten Bodenelektrode (24) angeordneten als Stützstein (14) ausgebildeten Feuerfestring umgriffen wird.

6. Gleichstrombeheiztes metallurgische Gefäß mit Bodenelektrode nach Anspruch 1,
dadurch gekennzeichnet,
daß das elektrisch leitende Feuerfestmaterial (22) des Gefäßbodens aus einer feuerfesten Stampfmasse (23) besteht.

7. Gleichstrombeheiztes metallurgisches Gefäß mit Bodenelektrode nach Anspruch 6,
dadurch gekennzeichnet,
daß die Feuerfeststampfmasse (23) metallische Einschlüsse (27) enthält.

8. Gleichstrombeheiztes metallurgisches Gefäß mit Bodenelektrode nach Anspruch 7,
dadurch gekennzeichnet,
daß die metallischen Einlagerungen (27) sternförmig zur Peripherie des elektrisch leitenden Bodens (23) hin einen zunehmenden Metallanteil aufweisen.

9. Gleichstrombeheiztes metallurgisches Gefäß mit Bodenelektrode nach einem der o. g. Ansprüche,
dadurch gekennzeichnet,
daß die Anzahl der Platten (25) hälftig geteilt wird und jede Hälfte an eine um das Ofengefäß (10) außenherum geführte Stromleitung (33, 34) angeschlossen ist.

10. Gleichstrombeheiztes metallurgisches Gefäß mit Bodenelektrode nach Anspruch 9,
dadurch gekennzeichnet,
daß die jeweiligen hälftigen Stromleitungen (33, 34) zur Stromversorgungseinrichtung (36, 37, 38) geführt sind.

11. Gleichstrombeheiztes metallurgisches Gefäß mit Bodenelektrode nach Anspruch 9,
dadurch gekennzeichnet,
daß zwischen den mit den Platten (25) verbundenen Stromstäben (31) und der Stromleitung (33 oder 34) flexible Kabel (35) vorgesehen sind.

12. Gleichstrombeheiztes metallurgisches Gefäß mit Bodenelektrode nach Anspruch 1,
dadurch gekennzeichnet,
daß sie als Anode geschaltet ist.

## Claims

1. A d.c.-heated metallurgical vessel with base electrode, in particular for producing ferroalloy, which has a metallic casing which is lined with refractory material, the base associated with the interior of the vessel and located beneath the refractory side wall of the metallurgical vessel being constructed as a base electrode of electrically conductive refractory material,
characterised in that the periphery of the electrically conductive base (22) is surrounded by metal plates (25) which have air excluded,
that the individual metal plates (25) are connected to current rods (31) which pass out of the furnace vessel (10) through the metal casing (11),
that the plates (25) including the current rods (31) are separated with respect to the metal casing (11) by electrical insulation (32).

2. A d.c.-heated metallurgical vessel with base electrode according to Claim 1, characterised in that the metal plates (25) are made of copper and have an L-shaped profile with an arm which points away from the centre point of the furnace.

3. A d.c.-heated metallurgical vessel with base electrode according to Claim 1, characterised in that the electrically conductive refractory material (22) consists of fired magnesite bricks which have a carbon content of 10 to 20%.

4. A d.c.-heated metallurgical vessel with base electrode according to Claim 1, characterised in that a refractory damping and insulating compound (26) is provided between the electrically conductive base (22) and the metal vessel casing (11).

5. A d.c.-heated metallurgical vessel with base electrode according to Claim 4, characterised in that the electrically conductive base (22) is dished and is surrounded by a refractory ring arranged between the damping and insulating compound (26) and the dished base electrode (24) and designed as a supporting brick (14).

6. A d.c.-heated metallurgical vessel with base electrode according to Claim 1, characterised in that the electrically conductive refractory material (22) of the vessel base consists of a refractory ramming compound (23).

7. A d.c.-heated metallurgical vessel with base electrode according to Claim 6, characterised in that the refractory ramming compound (23) contains metallic inclusions (27).

8. A d.c.-heated metallurgical vessel with base electrode according to Claim 7, characterised in that the metal inclusions (27) have an increasing metal content in a star shape towards the periphery of the electrically conductive base (23).

9. A d.c.-heated metallurgical vessel with base electrode according to one of the above claims, characterised in that the number of plates (25) is divided in half and each half is connected to a power supply line (33, 34) passing around the outside of the furnace vessel (10).

10. A d.c.-heated metallurgical vessel with base electrode according to Claim 9, characterised in that the respective half power supply lines (33, 34) pass to the current supply means (36, 37, 38).

11. A d.c.-heated metallurgical vessel with base electrode according to Claim 9, characterised in that flexible cables (35) are provided between the current rods (31) connected to the plates (25) and the power supply line (33 or 34).

12. A d.c.-heated metallurgical vessel with base electrode according to Claim 1, characterised in that it is connected as an anode.

## Revendications

1. Récipient métallurgique chauffé par courant continu comportant une électrode de fond, en particulier pour fabriquer des ferro-alliages, lequel possède une enveloppe métallique qui est revêtue d'une matière réfractaire, le fond, associé à l'espace interne du récipient et agencé au-dessous de la paroi latérale réfractaire du récipient métallurgique, avec l'électrode de fond, étant construit en une matière réfractaire électriquement conductrice,
caractérisé en ce que la périphérie du fond électriquement conducteur (22) est entourée par des plaques métalliques (25) à l'abri de l'air, en ce que les plaques métalliques individuelles (25) sont raccordées à des barrettes de courant (31) traversant l'enveloppe métallique (11) hors du récipient de four (10), et en ce que les plaques (25), y compris les barrettes de courant (31), sont séparées de l'enveloppe métallique (11) par une isolation électrique (32).

2. Récipient métallurgique chauffé par courant continu comportant une électrode de fond selon la revendication 1,
caractérisé en ce que les plaques métalliques (25) sont réalisées en cuivre et présentent un profil en forme de L ayant une branche s'écartant du centre du four.

3. Récipient métallurgique chauffé par courant continu comportant une électrode de fond selon la revendication 1,
caractérisé en ce que la matière réfractaire électriquement conductrice (22) est constituée de briques de magnésite calcinées, qui présentent une proportion de carbone de 10 à 20%.

4. Récipient métallurgique chauffé par courant continu comportant une électrode de fond selon la revendication 1,
caractérisé en ce que, entre le fond électriquement conducteur (22) et l'enveloppe métallique (11) du récipient, il est prévu une masse d'isolation et d'amortissement réfractaire (26).

5. Récipient métallurgique chauffé par courant continu comportant une électrode de fond selon la revendication 4,
caractérisé en ce que le fond électriquement conducteur (22) est réalisé par emboutissage et est entouré par une bague réfractaire agencée entre la masse d'isolation et d'amortissement (26) et l'électrode de fond emboutie (24), et réalisée comme entablement (14).

6. Récipient métallurgique chauffé par courant continu comportant une électrode de fond selon la revendication 1,
caractérisé en ce que la matière réfractaire électriquement conductrice (22) du fond du récipient est constituée d'une masse damée réfractaire (23).

7. Récipient métallurgique chauffé par courant continu comportant une électrode de fond selon la revendication 6,
caractérisé en ce que la masse réfractaire damée (23) comporte des inclusions métalliques (27).

8. Récipient métallurgique chauffé par courant continu comportant une électrode de fond selon la revendication 7,
caractérisé en ce que les inclusions métalliques (27) présentent une proportion métallique croissante en étoile vers la périphérie du fond électriquement conducteur (23).

9. Récipient métallurgique chauffé par courant continu comportant une électrode de fond selon une des revendications précédentes,
caractérisé en ce que le nombre des plaques (25) est divisé en deux, et chaque moitié est raccordée à une ligne de courant (33, 34) guidée extérieurement autour du récipient de four (10).

10. Récipient métallurgique chauffé par courant continu comportant une électrode de fond selon la revendication 9,
caractérisé en ce que les lignes de courant respectives (33, 34), divisées en deux, sont guidées vers le dispositif d'alimentation en courant (36, 37, 38).

11. Récipient métallurgique chauffé par courant continu comportant une électrode de fond selon la revendication 9,
caractérisé en ce que des câbles souples (35) sont prévus entre les barrettes de courant (31) reliées aux plaques (25) et la ligne de courant (33 ou 34).

12. Récipient métallurgique chauffé par courant continu comportant une électrode de fond selon la revendication 1,
caractérisé en ce que celle-ci est montée comme anode.
